# EUROPEAN PATENT APPLICATION

(11) **EP 4 480 762 A1**
(43) Date of publication of application: **25.12.2024**
(21) Application number: 23180171.3
(22) Date of filing: 19.06.2023
(51) Int. Cl.: B60S 1/38

(54) **WIPER BLADE FOR A MOTOR VEHICLE**

(71) Applicant: Valeo Systèmes d'Essuyage, 78322 Le Mesnil Saint Denis (FR)
(72) Inventor: SORIMUTHU, Velayutham, 602105 Chennai (IN); BILLOT, Philippe, 78322 La Verriere (FR); GRUPP, Martin, 74321 Bietigheim-Bissingen (DE)
(74) Representative: Valeo Visibility

(57) **Abstract**

Wiper blade (1) of a motor vehicle comprising a spoiler (2), a blade (3), and a first and a second splines (4a, 4b), the spoiler (2) and the blade (3) are produced in a single piece of flexible material and are joined with two longitudinal lateral grooves (6) which each receives a respective spline (4a, 4b), wherein the spoiler (2) presents a deflection surface (7) covering the first spline (4a) at least until a median area of this first spline (4a) and at most until the end of this first spline (4a), and the profile of said deflection surface (7) from the first spline (4a) to a tip of the spoiler (2), comprises a leading edge (8) of convex shape followed by a trailing edge (9) of concave shape without flat part between them.

## Description

### TECHNICAL FIELD

The invention relates to the field of wiper blade for a motor vehicle.

### BACKGROUND OF THE INVENTION

So-called flat blade wiper blades are formed by a semi-rigid assembly which retains the blade along its entire length.

They comprise two splines made of metal or hard polymer, to provide the wiper blade with intrinsic curvature. They also comprise a spoiler which has an aerodynamic profile formed such that the relative wind which is produced by the travel of the vehicle produces a force which tends to place the wiper blade on the glass panel.

The spoiler generally has a widened base which ends in a narrow tip, offset to one side of the base. This asymmetrical profile makes it possible to optimize the support surface for the incident flow of air.

Some flat blade improvements have been focused on lowering drag for slightly lower lift. This means that it still generates high uplift and one of its weaknesses may be that the uplift is sensitive to extreme attack angle variations.

Other flat blade improvements have been targeted on lower uplift but at a cost of larger drag.

### SUMMARY OF THE INVENTION

An objective of the present invention is to provide a wiper blade having a spoiler optimized for better aerodynamic performances.

For this purpose, the present invention relates to a wiper blade of a motor vehicle comprising:
- a spoiler,
- a blade, and
- a first and a second splines,
- the spoiler and the blade are produced in a single piece of flexible material and are joined with two longitudinal lateral grooves which each receives a respective spline,
wherein the spoiler presents a deflection surface covering the first spline at least until a median area of this first spline and at most until the end of this first spline, and the profile of said deflection surface from the first spline to a tip of the spoiler, comprises a leading edge of convex shape followed by a trailing edge of concave shape without flat part between them.

With this deflection surface profile, the spoiler engages the incident air flow more smoothly over the deflection surface. This allows achieving a minimal uplift of the spoiler from the spline with minimal drag increasing. The spoiler trailing edge position can be determined to allow a better robustness against extreme attack angle. The trailing edge and the leading edge shapes are optimized for better aerodynamic performances.

The wiper blade can also comprise one or more of the features which are described hereinbelow, taken alone or in combination.

As example, the leading edge of convex shape and the trailing edge of concave shape are connected tangentially.

According to an embodiment, a portion of a side surface of the first spline is free from the deflection surface of the spoiler. For example, more than 20% of the side surface of the first spline is free from the deflection surface of the spoiler.

According to another embodiment, the deflection surface of the spoiler covers all the first spline. Since the profile of the deflection surface is optimized, the leading edge can be moved up to the end of the first spline without risk under high aerodynamic loads. The spoiler is then better attached to the first spline and the engagement of the air flow is smoother.

The concave shape of the trailing edge may present a circular transverse cross-section. The radius of the concave shape of the trailing edge may be comprised between 4mm and 5,5mm.

The convex shape of the leading edge may extend on at least 20% of the profile of the deflection surface, such as a half of the profile of the deflection surface.

The concave shape of the trailing edge may extend on at least 20% of the profile of the deflection surface, such as a half of the profile of the deflection surface.

The height of the wiper blade in maximum blade pivot position may be comprised between 16mm and 18mm. With this height of the spoiler, the lift can be reduced over flat blades of the prior art while the drag is the same.

The distance between on the one hand, the middle of the wiper blade between the splines and on the other hand, the projection of the tip of the spoiler on the plane of the splines may be comprised between 4.75mm and 6.25mm.

The spoiler also presents a rear surface. The deflection surface is the surface of the spoiler from the first spline to the tip of the spoiler. The rear surface is the surface of the spoiler from the tip to the second spline. The rear surface covers the second spline for example at least until a median area of this second spline and at most until the end of this second spline.

At least one longitudinal channel may be provided in the body of the spoiler. The deflection surface profile can thus be optimized with minimal material.

The invention will be better understood in view of the following description, referring to the annexed figures in which:
[Fig.1] Figure 1 is a schematic representation in perspective of an end of a wiper blade according to a first embodiment.
[Fig.2] Figure 2 shows a transverse cross-section of the wiper-blade in Figure 1.
[Fig.3A] Figure 3A shows a transverse cross-section of a first example of a wiper blade of the first embodiment, shown in the maximum blade pivot position of the wiper blade.
[Fig.3B] Figure 3B shows a similar figure of figure 3A for a second example of wiper blade.
[Fig.3C] Figure 3C shows a similar figure of figure 3A for a third example of wiper blade.
[Fig.3D] Figure 3D shows a similar figure of figure 3A for a fourth example of wiper blade.
[Fig.3E] Figure 3E shows a similar figure of figure 3A for a fifth example of wiper blade.
[Fig.4A] Figure 4A shows a transverse cross-section of a first example of a wiper blade of a second embodiment, shown in the maximum blade pivot position of the wiper blade.
[Fig.4B] Figure 4B shows a similar figure of figure 4A for a second example of wiper blade.
[Fig.4C] Figure 4C shows a similar figure of figure 4A for a third example of wiper blade.
[Fig.4D] Figure 4D shows a similar figure of figure 4A for a fourth example of wiper blade.
[Fig.4E] Figure 4E shows a similar figure of figure 4A for a fifth example of wiper blade.
[Fig.5A] Figure 5A shows a transverse cross-section of a first example of a wiper blade of a third embodiment.
[Fig.5B] Figure 5B shows a similar figure of figure 5A for a second example of wiper blade.
[Fig.5C] Figure 5C shows a similar figure of figure 5A for a third example of wiper blade.

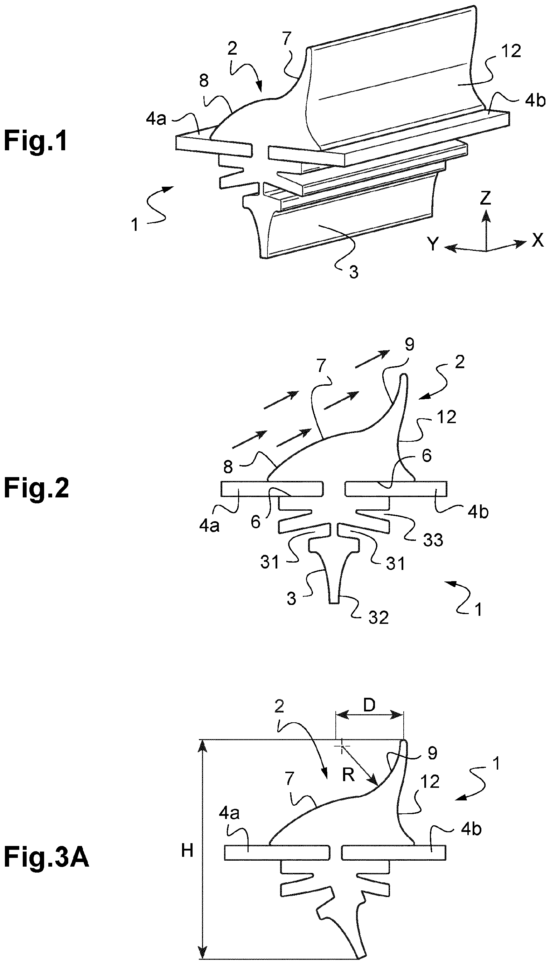

Hereinafter in the description, on a non-limiting basis, longitudinal, vertical and transverse directions will be adopted as indicated in FIG. 1 by the trihedron (X, Z, Y) which is fixed relative to the wiper blade. The longitudinal direction X corresponds to the main direction of the wiper blade.

In the following description, elements which are identical or similar will be designated by the same reference numbers.

### DETAILED DESCRIPTION OF THE INVENTION

The following achievements are examples. Although the specification refers to one or several embodiments, it does not imply that each reference refers to the same embodiment or that the features apply only to a single embodiment. Simple features of different embodiments can also be combined to provide other embodiments.

FIG. 1 represents a wiper blade 1 for a motor vehicle. The wiper blade 1 is a blade of the flat blade type, with a main longitudinal orientation X.

The wiper blade 1 comprises a spoiler 2, a blade 3 and two splines 4a, 4b.

The spoiler 2 and the blade 3 are produced in a single piece of flexible material, such as rubber or elastomer. This flexible material can be formed by one or more materials. The spoiler 2 and the blade 3 produced in a single piece can be obtained by moulding or by extrusion of one or more materials.

The wiper blade 1 also comprises a connector for fitting and articulation of the wiper blade 1 on the free end of a drive arm.

Shown more clearly in FIG. 2, the blade 3 comprises a lip 32 that is intended to be in contact with a glass surface to be wiped, a heel 33 and longitudinal recesses 31 between the heel 33 and the lip 32, which allows the lip 32 to pivot relative to the longitudinal axis X at each change of direction when the wiper blade 1 is activated against the glass surface.

The spoiler 2 and the blade 3 in a single piece are joined with two longitudinal lateral grooves 6. Each longitudinal lateral groove 6 receives a respective spline 4a, 4b. The end of the splines 4a 4b are free, not wrapped by the spoiler 2.

Each spline 4a, 4b is formed by a body in a single piece, comprising for example a flat metal strip which is curved vertically, such that, when the wiper blade 1 is supported on the glass panel, the support forces exerted by the drive arm are distributed along the entire length of the blade 3.

The spoiler 2 has a transverse cross-section that is asymmetrical. It presents a deflection surface 7 (or support surface) that deflect the incident air produced by the relative wind when the vehicle is traveling and a rear surface 12.

This deflection surface 7 has a widened base which ends in a narrow tip, offset to one side of the base. It covers the first spline 4a at least until a median area of this first spline 4a and at most until the end of this first spline 4a. The deflection surface 7 is the surface of the spoiler 2 from the first spline 4a to the tip of the spoiler 2. The rear surface 12 is the surface of the spoiler 2 from the tip to the second spline 4b.

The first spline 4a is also referred to an upstream spline 4a and the second spline 4b as a downstream spline 4b, as the first spline 4a is located on the side of the wiper blade 1 which is configured to be exposed to the incident air flow and the second spline 4b is located on the side of the wiper blade 1 which is configured to be downstream with respect to the incident air flow (figure 2).

The rear surface 12 of the spoiler 2 covers the second spline 4b at least until a median area of this second spline 4b and at most until the end of this second spline 4b.

The profile of this deflection surface 7, from the first spline 4a to the tip of the spoiler 2, comprises a leading edge 8 of convex shape followed by a trailing edge 9 of concave shape without flat part between the leading edge 8 and the trailing edge 9. As example, the leading edge 8 of convex shape and the trailing edge 9 of concave shape are connected tangentially.

The concave shape of the trailing edge 9 may present a circular transverse cross-section.

The convex shape of the leading edge 8 may extend on at least 20% of the profile of the deflection surface 7, such as a first half of the profile of the deflection surface 7.

The concave shape of the trailing edge 9 may extend on at least 20% of the profile of the deflection surface 7, such as a second half of the profile of the deflection surface 7.

With this deflection surface 7 profile, the spoiler 2 engages the incident air flow more smoothly over the deflection surface. This allows achieving a minimal uplift of the spoiler 2 from the spline 4a with minimal drag increasing. The spoiler trailing edge 9 position can be determined to allow a better robustness against extreme attack angle. The trailing edge 9 and the leading edge 8 shapes are optimized for better aerodynamic performances.

The height H of the wiper blade 1, from the tip of the spoiler 2 to the end of the lip 32 of the blade 3, in the maximum blade pivot position of the wiper blade 1, may be comprised between 16mm and 18mm. The maximum blade pivot position is reached when the pivoted lip 32 abuts the heel 33 of the blade 3.

The radius R of the concave shape of the trailing edge 9 may be comprised between 4mm and 5,5mm.

The distance D between, on the one hand, the middle of the wiper blade 1 between the splines 4a, 4b and on the other hand, the projection of the tip of the spoiler 2 on the plane of the splines 4a, 4b, may be comprised between 4.75mm and 6.25mm.

This could be better understood in relation with the figures 3A to 4E.

According a first embodiment shown on figures 3A to 3E, a portion of a side surface of the first spline 4a is free from the deflection surface 7 of the spoiler 2. As example, more than 20% of the side surface of the first spline 4a is free from the deflection surface 7 of the spoiler 2. Moreover, in this first embodiment, the convex shape of the leading edge 8 extends on a first half of the profile of the deflection surface 7 and the concave shape of the trailing edge 9 extends on a second half of the profile of the deflection surface 7.

Figure 3A shows a first example of this first embodiment. In this example, the height H of the wiper blade 1 in its maximum blade pivot position is 16mm. The radius R of the concave shape of the trailing edge 9 is 4mm. The distance D between the middle of the wiper blade 1 and the projection of the tip of the spoiler 2 is 4.75mm.

In this first example, the spoiler 2 does not cover the entire side surface of the second spline 4b.

With this height H of the spoiler 2, the lift can be reduced over flat blades of the prior art while the drag is the same.

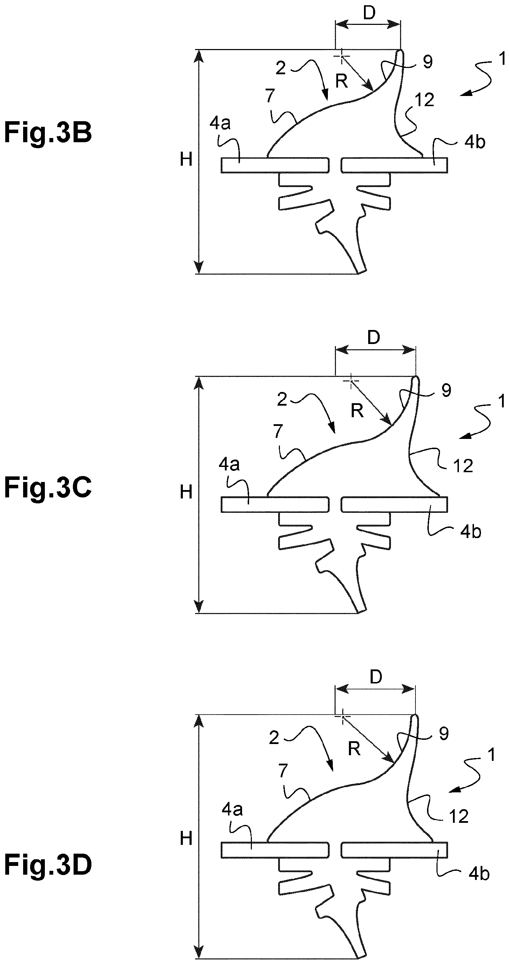

Figure 3B shows a second example of this first embodiment. In this example, the height H of the wiper blade 1 in its maximum blade pivot position is 16,5mm. The radius R of the concave shape of the trailing edge 9 is 4mm. The distance D between the middle of the wiper blade 1 and the projection of the tip of the spoiler 2 is 4.75mm.

Figure 3C shows a third example of this first embodiment. In this example, the height H of the wiper blade 1 in its maximum blade pivot position is 17mm. The radius R of the concave shape of the trailing edge 9 is 4,5mm. The distance D between the middle of the wiper blade 1 and the projection of the tip of the spoiler 2 is 5.75mm.

Figure 3D shows a fourth example of this first embodiment. In this example, the height H of the wiper blade 1 in its maximum blade pivot position is 17,5mm. The radius R of the concave shape of the trailing edge 9 is 5mm. The distance D between the middle of the wiper blade 1 and the projection of the tip of the spoiler 2 is 5.75mm.

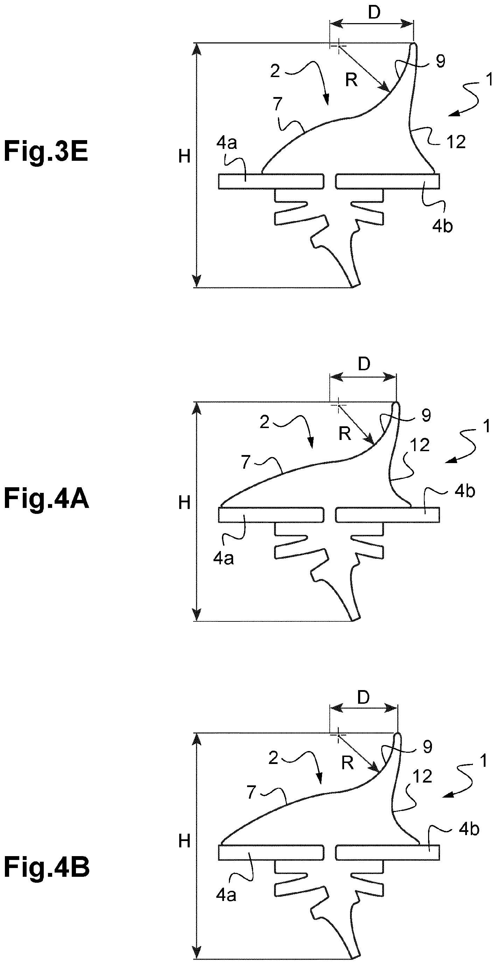

Figure 3E shows a fifth example of this first embodiment. In this example, the height H of the wiper blade 1 in its maximum blade pivot position is 18mm. The radius R of the concave shape of the trailing edge 9 is 5,5mm. The distance D between the middle of the wiper blade 1 and the projection of the tip of the spoiler 2 is 6,25mm.

In this example, the spoiler 2 covers the entire side surface of the second spline 4b.

As can be seen on those figures, as the height H of the wiper blade 1 increases, as the radius R of the concave shape of the trailing edge 9 and the distance D between the middle of the wiper blade 1 and the projection of the tip of the spoiler 2 raise. That extends the spoiler 2 on the side surface of the second spline 4b to the end of the second spline 4b and thus, the wiper blade is less sensitive to extreme angle attacks. The spoiler trailing edge 9 position can be determined to reduce the profile sensibility to extreme attack angles values while the leading edge 8 shape allows better aerodynamic performances.

Moreover, as the height of the spoiler 2 increases, as the radius R of the concave shape of the trailing edge 9 increases and thus, as the lift is reduced with a slightly higher drag. The higher the spoiler 2 is, the higher the radius R of the concave shape of the trailing edge 9 is, the higher is the lift reduction.

The concave shape of the trailing edge 9 can be optimized to heigh while the convex shape of the leading edge 8 remains optimized for good aerodynamic performances.

According a second embodiment shown on figures 4A to 4E, the deflection surface 7 of the spoiler 2 covers the first spline 4a until the end of this first spline 4a.

The convex shape of the leading edge 8 extends further than the concave shape of the trailing edge 9 and more than a half of the profile of the deflection surface 7.

Figure 4A shows a first example of this second embodiment. In this example, the height H of the wiper blade 1 in its maximum blade pivot position is 16mm. The radius R of the concave shape of the trailing edge 9 is 4mm. The distance D between the middle of the wiper blade 1 and the projection of the tip of the spoiler 2 is 4.75mm. In this example, the spoiler 2 does not cover the entire side surface of the second spline 4b.

Figure 4B shows a second example of this second embodiment. In this example, the height H of the wiper blade 1 in its maximum blade pivot position is 16,5mm. The radius R of the concave shape of the trailing edge 9 is 4mm. The distance D between the middle of the wiper blade 1 and the projection of the tip of the spoiler 2 is 4.75mm.

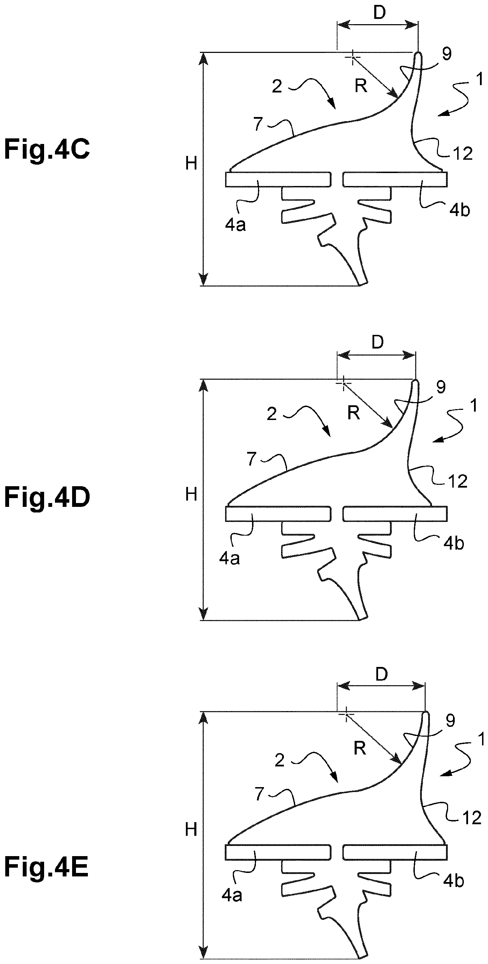

Figure 4C shows a third example of this second embodiment. In this example, the height H of the wiper blade 1 in its maximum blade pivot position is 17mm. The radius R of the concave shape of the trailing edge 9 is 4,5mm. The distance D between the middle of the wiper blade 1 and the projection of the tip of the spoiler 2 is 5.75mm.

Figure 4D shows a fourth example of this second embodiment. In this example, the height H of the wiper blade 1 in its maximum blade pivot position is 17,5mm. The radius R of the concave shape of the trailing edge 9 is 5mm. The distance D between the middle of the wiper blade 1 and the projection of the tip of the spoiler 2 is 5.75mm.

Figure 4E shows a fifth example of this first embodiment. In this example, the height H of the wiper blade 1 in its maximum blade pivot position is 18mm. The radius R of the concave shape of the trailing edge 9 is 5,5mm. The distance D between the middle of the wiper blade 1 and the projection of the tip of the spoiler 2 is 6,25mm. In this example, the spoiler 2 covers the entire side surface of the second spline 4b.

In this embodiment, as the height H of the wiper blade 1 increases, as the radius R of the concave shape of the trailing edge 9 and the distance D between the middle of the wiper blade 1 and the projection of the tip of the spoiler 2 raise and the more the spoiler 2 extends on the side surface of the second spline 4b. In figure 4E, the spoiler 2 also covers the end of the second spline 4b.

Since the profile of the deflection surface 7 is optimized, the leading edge 8 can be moved up to the end of the first spline 4a without risk under high aerodynamic loads. The spoiler 2 is then better attached to the first spline 4a and the engagement of the air flow is smoother.

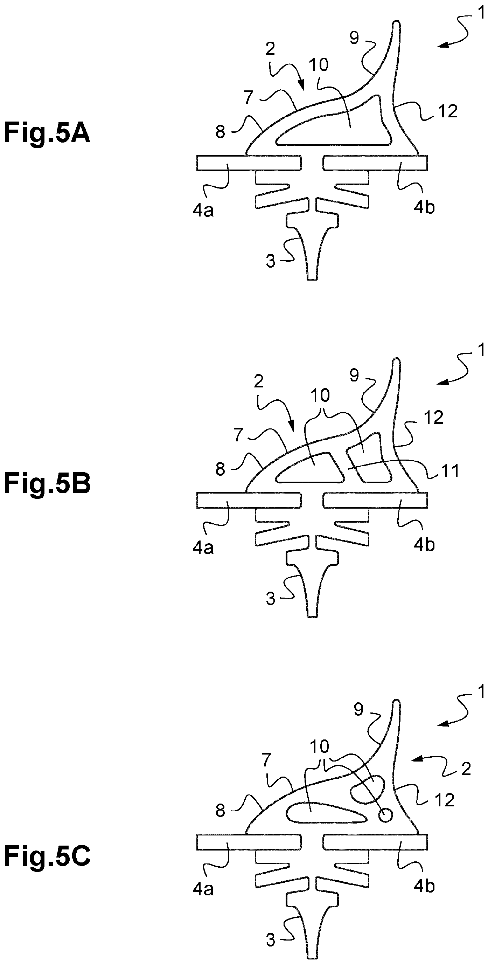

Figures 5A, 5b, 5c show another embodiment of the wiper blade 1.

In this embodiment, at least one longitudinal channel 10 is provided in the body of the spoiler 2. The deflection surface profile can thus be optimized with minimal material.

In the first example of figure 5A, only one longitudinal channel 10 is provided in the spoiler 2. The shape of the transverse cross-section of the longitudinal channel 10 might follow the shape of the transverse cross-section of the spoiler 2. In this example, the spoiler 2 is hollow and a maximum of material is removed.

In the second example of figure 5B, a strengthening longitudinal barrier 11 crosses the longitudinal hollow of the spoiler 2, splitting it into two longitudinal channels 10. In this example, the stiffness of the spoiler 2 is reinforced compared to the first example.

Figure 5C shows another example in which three longitudinal channel 10 are provided in the spoiler 2. Each shows a different shape of the transverse cross-section.

As can be seen on those examples, the longitudinal channel 10 can take any shape.

The other elements of this embodiment are like those of the first and second embodiments previously described.

## Claims

1. Wiper blade (1) of a motor vehicle comprising:
- a spoiler (2),
- a blade (3), and
- a first and a second splines (4a, 4b),
- the spoiler (2) and the blade (3) are produced in a single piece of flexible material and are joined with two longitudinal lateral grooves (6) which each receives a respective spline (4a, 4b),
wherein the spoiler (2) presents a deflection surface (7) covering the first spline (4a) at least until a median area of this first spline (4a) and at most until the end of this first spline (4a), and the profile of said deflection surface (7) from the first spline (4a) to a tip of the spoiler (2), comprises a leading edge (8) of convex shape followed by a trailing edge (9) of concave shape without flat part between them.

2. Wiper blade (1) according to claim 1, wherein the leading edge (8) of convex shape and the trailing edge (9) of concave shape are connected tangentially.

3. Wiper blade (1) according to one of the previous claims, wherein a portion of a side surface of the first spline (4a) is free from the deflection surface (7) of the spoiler (2).

4. Wiper blade (1) according to claim 3, wherein more than 20% of the side surface of the first spline (4a) is free from the deflection surface (7) of the spoiler (2).

5. Wiper blade (1) according to one of claims 1 or 2, wherein the deflection surface (7) of the spoiler (2) covers all the first spline (4a).

6. Wiper blade (1) according to one of the previous claims, wherein the concave shape of the trailing edge (9) presents a circular transverse cross-section.

7. Wiper blade (1) according to the previous claims, wherein the radius (R) of the concave shape of the trailing edge (9) is comprised between 4mm and 5,5mm.

8. Wiper blade (1) according to one of the previous claims, wherein the convex shape of the leading edge (8) and/or the concave shape of the trailing edge (9) extend on at least 20% of the profile of the deflection surface (7), such as a half of the profile of the deflection surface (7).

9. Wiper blade (1) according to one of the previous claims, wherein the height (H) of the wiper blade (1) in maximum blade pivot position is comprised between 16mm and 18mm.

10. Wiper blade (1) according to one of the previous claims, wherein the distance (D) between on the one hand, the middle of the wiper blade (1) between the splines (4a, 4b) and on the other hand, the projection of the tip of the spoiler (2) on the plane of the splines (4a, 4b) is comprised between 4.75mm and 6.25mm.

11. Wiper blade (1) according to one of the previous claims, wherein the spoiler (2) also presents a rear surface (12) covering the second spline (4b) at least until a median area of this second spline (4b) and at most until the end of this second spline (4b).

12. Wiper blade (1) according to one of the previous claims, wherein at least one longitudinal channel (10) is provided in the body of the spoiler (2).
